# EUROPEAN PATENT SPECIFICATION

(11) **EP 3 668 109 B1**
(45) Date of publication and mention of the grant of the patent: **24.01.2024**
(21) Application number: 17926815.6
(22) Date of filing: 29.09.2017
(51) Int. Cl.: H04R 1/08, H04M 1/03, H04M 1/18, H04R 1/04

(54) **MICROPHONE COMPONENT AND ELECTRONIC DEVICE**
MIKROFONKOMPONENTE UND ELEKTRONISCHE VORRICHTUNG
COMPOSANT DE MICROPHONE ET DISPOSITIF ÉLECTRONIQUE

(43) Date of publication of application: 17.06.2020
(73) Proprietor: Huawei Technologies Co., Ltd., Longgang District Shenzhen, Guangdong 518129 (CN)
(72) Inventor: YANG, Jun, Shenzhen Guangdong 518129 (CN); YU, Pengfei, Shenzhen Guangdong 518129 (CN); LI, Jie, Shenzhen Guangdong 518129 (CN); ZHAO, Huan, Shenzhen Guangdong 518129 (CN)
(74) Representative: Thun, Clemens
(86) International application number: PCT/CN2017/104594
(87) International publication number: WO 2019/061356

(56) References cited:
- WO-A1-2007/123293
- CN-A- 107 182 017
- CN-U- 202 455 520
- CN-Y- 201 378 860
- FI-A- 20 050 594
- US-A1- 2005 220 448
- US-A1- 2016 360 318

## Description

### TECHNICAL FIELD

This application relates to the field of intelligent hardware product technologies, and in particular, to a microphone component and an electronic device.

### BACKGROUND

With continuous development of intelligent hardware products, there is an increasingly strong demand for waterproofing of the products. Especially for mobile phones and smart wearable products, waterproofing has gradually become an essential function of the products. In addition, as the products are covering increasing use scenarios, waterproofing requirements are increasingly high. Currently, for smart wearable products with an audio function, the waterproofing function is usually implemented by bonding a waterproof film onto a waterproof screen. In this waterproof film solution, audio performance and waterproofing requirements of the device are mutually affected factors. For example, a microphone is used to receive sounds, and a waterproofing design is also required at a microphone position of the microphone. On the premise that the waterproofing function is satisfied, the microphone has a higher requirement for audio performance. Therefore, the industry is constantly exploring how to design a scheme for installing a waterproof film at the microphone position, so as to minimize impact of the waterproof film on acoustic indicators while satisfying the waterproofing requirements.

In the prior art, a waterproof film is adhered to a shell of an intelligent electronic device by using a double-sided tape, and a microphone component is installed in the shell onto which the waterproof film is affixed, making the microphone component attach closely to the waterproof film on a mating face, so as to squeeze the waterproof film between the shell and the microphone component to implement audio sealing and waterproofing. Because waterproof films need to vibrate, they are generally thin and extremely sensitive to pressure. Once a slight press is applied onto the waterproof films, their acoustic performance changes greatly. The microphone component and the shell squeeze the waterproof film, with a pressing force fluctuating greatly. As a result, the acoustic performance of the waterproof film changes and consistency becomes less desirable, thereby affecting audio experience.

Prior art document US 2005/0220448 A1 refers to a digital camera having an acoustic member including a first cover, a water-proof sheet and a second cover. The second cover is spaced from the water-proof sheet. The first cover has a first sound hole opposed to the acoustic member. The water-proof sheet is disposed such as to covers the first sound hole. The second cover has a second sound hole. The second sound hole is deviated in position toward an outer periphery of the first sound hole, so that the second sound hole is not located on an extension of an axis of the first sound hole.

Prior art document US 2016/0360318 A1 refers to an electronic device and a waterproof sheet thereof. The electronic device includes a housing having a sound guiding opening, a sound unit assembled inside the housing and positioned with the sound guiding opening, and a waterproof sheet covering the sound guiding opening and including a waterproof foam layer and a waterproof double-sided adhesive layer. The waterproof foam layer includes an outer side surface and an inner side surface. The waterproof double-sided adhesive layer includes a waterproof foam member, first and second waterproof adhesive side surfaces adapted to two surfaces of the waterproof foam member. The first waterproof adhesive side surface is bonded to the inner side surface. The waterproof double-sided adhesive layer further includes a central through hole passing through the waterproof double-sided adhesive layer and positioned with the sound guiding opening. The second waterproof adhesive side surface is bonded to the outer surface of the housing.

### SUMMARY

In view of this, this application provides an electronic device comprising a microphone component, so as to resolve a prior-art problem that acoustic performance of a waterproof film changes and consistency becomes less desirable as a result of squeezing of the waterproof film by a microphone component or a shell, and consequently audio experience is affected. This problem is solved by the subject matter of the independent claims. Further implementation forms are provided in the dependent claims.

In a process of assembling the microphone component into the shell and during normal use, the microphone body, the support member, and the like do not squeeze the waterproof film. On the premise of ensuring good audio sealing and waterproofing effects, the waterproof film maintains good audio characteristics and consistency, thereby improving audio experience of a product.

Beneficial effects of this application are as follows: The waterproof film separates the microphone body inside the support member from the outside, and the groove is made on the support member or the shell. The waterproof film is positioned and stably fixed by the groove. Therefore, in a process of assembling the microphone component into the shell and during normal use, the microphone body, the support member, and the like do not squeeze the waterproof film. The thickness of the waterproof film is not greater than a depth of the groove. There is a gap between the waterproof film and the shell after the microphone component is assembled, and the shell does not squeeze the waterproof film. On the premise of ensuring good audio sealing and waterproofing effects, the waterproof film maintains good audio characteristics and consistency, thereby improving audio experience of a product.

### BRIEF DESCRIPTION OF DRAWINGS

To describe the technical solutions in the embodiments of this application or in the background more clearly, the following briefly describes the accompanying drawings that need to be used in the embodiments of this application or the background.
FIG. 1 is a schematic diagram of an intelligent electronic device according to Embodiment 1 of this application;
FIG. 2 to FIG. 4 are schematic diagrams of a microphone component according to Embodiment 1 of this application;
FIG. 5 is a schematic diagram of a microphone body according to Embodiment 1 of this application;
FIG. 6 is a schematic diagram of a support member according to Embodiment 1 of this application;
FIG. 7 is a schematic diagram of fitting of a support member and a microphone body according to Embodiment 1 of this application;
FIG. 8 is a schematic diagram of fitting of a support member and a waterproof film according to Embodiment 1 of this application;
FIG. 9 is a schematic diagram of a waterproof film according to Embodiment 1 of this application;
FIG. 10 is a schematic diagram of fitting of a support member, a waterproof film, and a shell according to Embodiment 1 of this application;
FIG. 11 is a schematic diagram of sound wave transmission of an intelligent electronic device according to Embodiment 1 of this application;
FIG. 12 is a schematic diagram of a support member according to Embodiment 1 of this application;
FIG. 13 is a schematic diagram of a microphone component according to Embodiment 1 of this application;
FIG. 14 is a schematic diagram of a shell according to Embodiment 1 of this application;
FIG. 15 is a schematic diagram of assembling a microphone component and a shell according to Embodiment 1 of this application;
FIG. 16 is a schematic diagram of a shell according to Embodiment 1 of this application;
FIG. 17 to FIG. 20 are schematic diagrams of assembling some structural components of an intelligent electronic device according to Embodiment 1 of this application;
FIG. 21 to FIG. 26 are schematic diagrams of steps of assembling an intelligent electronic device according to Embodiment 1 of this application;
FIG. 27 to FIG. 29 are schematic diagrams of an intelligent electronic device according to Embodiment 2 of this application;
FIG. 30 and FIG.31 are schematic diagrams of a microphone component according to Embodiment 2 of this application;
FIG. 32 is a schematic diagram of a shell according to Embodiment 2 of this application;
FIG. 33 is a schematic diagram of assembling a microphone component and a shell according to Embodiment 2 of this application;
FIG. 34 and FIG.35 are schematic diagrams of assembling a shell and a waterproof film according to Embodiment 2 of this application;
FIG. 36 is a schematic diagram of assembling some structural components of an intelligent electronic device according to Embodiment 2 of this application;
FIG. 37 is a schematic diagram of assembling a decorative sheet according to Embodiment 2 of this application;
FIG. 38 is a schematic diagram of a decorative sheet according to Embodiment 2 of this application;
FIG. 39 is a schematic diagram of sound wave transmission of an intelligent electronic device according to Embodiment 2 of this application;
FIG. 40 is a schematic diagram of assembling some structural components of an intelligent electronic device according to Embodiment 2 of this application;
FIG. 41 is a schematic diagram of a shell according to Embodiment 2 of this application; and

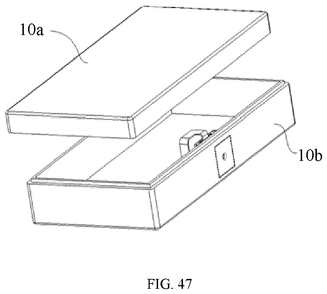

FIG. 42 to FIG. 47 are schematic diagrams of steps of assembling an intelligent electronic device according to Embodiment 2 of this application.

### DESCRIPTION OF EMBODIMENTS

The following describes the embodiments of this application with reference to the accompanying drawings in the embodiments of this application.

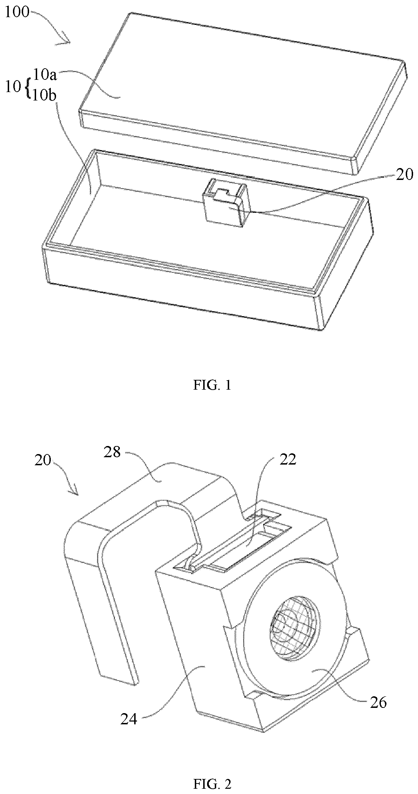

As shown in FIG. 1, a microphone component 20 provided in Embodiment 1 of this application is installed inside a shell 10 of an intelligent electronic device 100, and is configured to receive a sound wave from the outside, convert a sound signal into an electrical signal, and transmit the electrical signal to a signal processing apparatus or the like for processing. In an implementation, if the intelligent electronic device 100 is a mobile phone, the signal processing apparatus is an electronic device disposed on a main board, such as a control chip. In this embodiment, the microphone component 20 may be configured to receive sound information from a user, such as the user's language, so as to implement such functions as calling or man-machine interaction of the intelligent electronic device 100. The microphone component 20 may also be configured to receive environmental sound information in a specific situation for analysis and other operations. In an implementation, the intelligent electronic device 100 may be an intelligent wearable device, such as a smart band or smart eyeglasses. In another implementation, the intelligent electronic device 100 may be a mobile terminal, such as a mobile phone, a tablet computer, or a laptop. The microphone component 20 is accommodated in the shell 10. The shell 10 protects the microphone component 20. The shell 10 separates the microphone component 20 and other electronic components from an external environment outside the shell 10, and is specifically configured to separate environmental factors such as an ash layer and water that may cause damage to the microphone component 20 and the other electronic components.

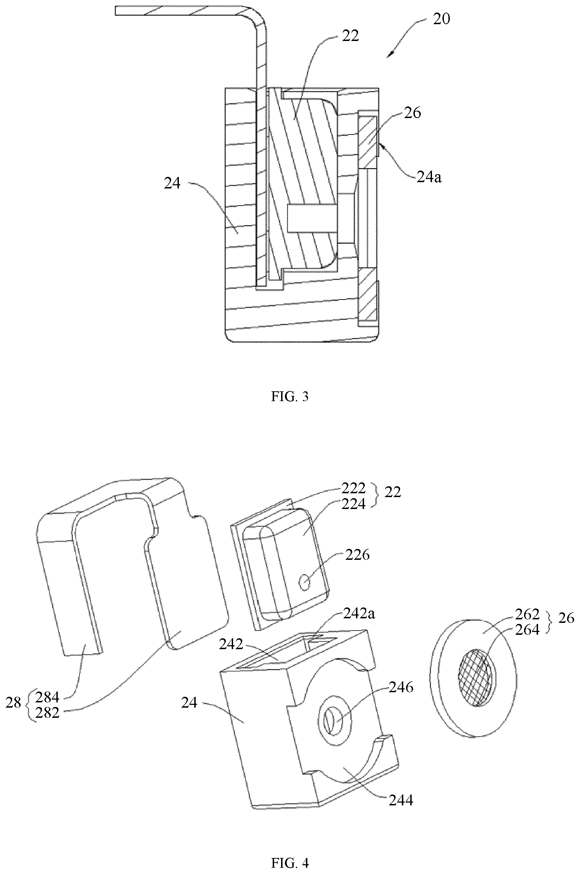

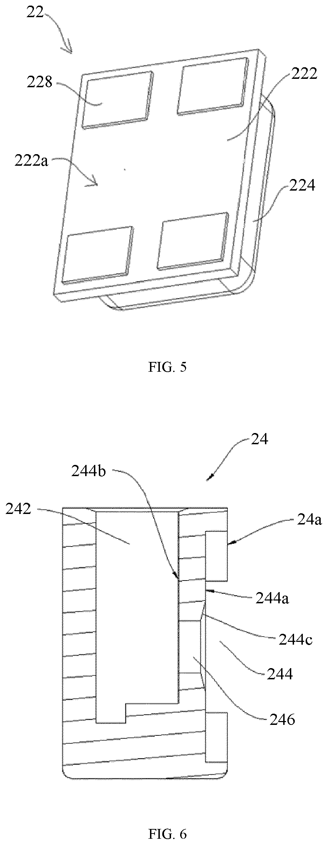

As shown in FIG. 2, FIG. 3, and FIG. 4, the microphone component 20 includes a microphone body 22, a support member 24, and a waterproof film 26. Specifically, an accommodation cavity 242 is provided inside the support member 24, and the microphone body 22 is accommodated inside the accommodation cavity 242. An outer surface 24a of a support member 24 is also provided with a groove 244 connected to the accommodation cavity 242, and the waterproof film 26 is accommodated in the groove 244. The support member 24 is configured to be fixed into the shell 10, so as to fix the microphone component 20 in the shell 10. In this embodiment, the microphone body 22 is configured to receive a sound wave. Specifically, the microphone body 22 is an apparatus configured to convert a sound signal into an electrical signal. Specifically, in FIG. 4, the microphone body 22 includes a base 222, an outer shell 224, an electronic device, and a diaphragm. The outer shell 224 is fixedly connected to the base 222, and the electronic device and the diaphragm are accommodated in a cavity formed by mutually connecting the outer shell 224 and the base 222. A receiving hole 226 is provided on the outer shell 224, and the receiving hole 226 extends to the inside of the outer shell 224. The sound wave transmitted to the microphone body 22 from the outside converts an air vibration into a vibration of the diaphragm, that is, the diaphragm completes receiving of the sound signal, and the electronic device converts the vibration of the diaphragm into an electrical signal containing sound information. The electronic device is electrically connected to the base 222, and the base 222 is electrically connected to the signal processing apparatus, so that the electronic device transmits the electrical signal containing the sound information to the signal processing apparatus. As shown in FIG. 5, in an implementation, an outer surface 222a of the base 222 is provided with a bonding pad 228 for welding with a flexible circuit board 28 or a conducting lead to implement an electrical connection.

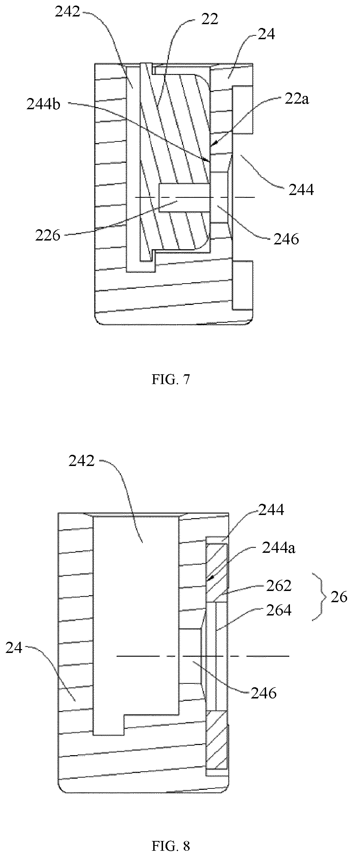

In this embodiment, the support member 24 is configured to be fixed into the shell 10. As shown in FIG. 4 and FIG. 6, the accommodation cavity 242 is provided inside the support member 24. Specifically, the accommodation cavity 242 is a cavity extending inward from one end of the support member 24, and the accommodation cavity 242 is connected to the outside through an opening. As shown in FIG. 7, the microphone body 22 is accommodated inside the accommodation cavity 242. In this embodiment, the microphone body 22 is inserted into the accommodation cavity 242 through the opening of the accommodation cavity 242, so that the microphone body 22 is entirely accommodated inside the accommodation cavity 242. As shown in FIG. 4, in an implementation, the opening of the support member 24 is provided with an upside-down angle 242a, to prevent a sharp edge of the opening from easily scratching an operator's finger during assembling of the microphone component 20 on one hand, and make it convenient to quickly insert the microphone body 22 into the accommodation cavity 242 from the opening on the other hand. In an implementation, an internal shape of the accommodation cavity 242 is the same as a contour shape of the microphone body 22. This helps the inside of the accommodation cavity 242 to fit tightly to the microphone body 22. In an implementation, a cross section of the accommodation cavity 242 is a T-shape, where a larger part of the T-shape accommodation cavity 242 is used for inserting the base 222, and a smaller part of the T-shape accommodation cavity 242 is used for inserting the outer shell 224.

As shown in FIG. 4 and FIG. 6, in this embodiment, the outer surface 24a of the support member 24 is further provided with the groove 244, and the groove 244 is connected to the accommodation cavity 242. Specifically, the groove 244 is made on the outer surface 24a that is of the support member 24 and that is configured to attach to the shell 10. In this embodiment, the support member 24 is further provided with a first through-hole 246. The first through-hole 246 connects to the groove 244 and the accommodation cavity 242. A groove bottom 244a is disposed inside the groove 244. The first through-hole 246 is connected between the groove bottom 244a and an inner surface 244b of the support member 24. It should be noted that, the outer surface 24a is a surface that is of the support member 24 and that faces an outer side of the support member 24, the inner surface 244b is a surface that is of the support member 24 and that is opposite to the outer surface 24a, and the inner surface 244b is also a wall surface of the accommodation cavity 242.

As shown in FIG. 2 and FIG. 8, in this embodiment, the waterproof film 26 is entirely accommodated in the groove 244. Specifically, the waterproof film 26 is attached and fixed to the groove bottom 244a. In an implementation, the waterproof film 26 is attached on the groove bottom 244a by using a double-sided tape. On one hand, the double-sided tape firmly fixes the waterproof film 26, and on the other hand, the double-sided tape allows no gap between the waterproof film 26 and a mating face of the groove bottom 244a, thereby preventing water from entering the first through-hole 246 and then to the accommodation cavity 242 through a gap between the waterproof film 26 and the groove bottom 244a. In this embodiment, a thickness of the waterproof film 26 is not greater than a depth of the groove 244.

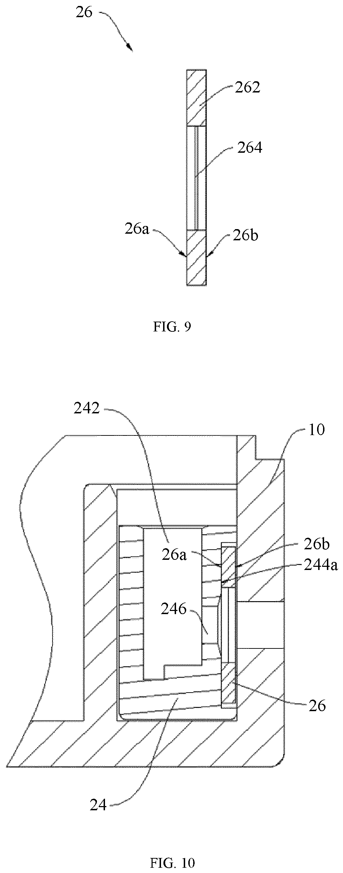

Specifically, as shown in FIG. 4 and FIG. 9, the waterproof film 26 includes a first end face 26a and a second end face 26b that are disposed oppositely to each other. The first end face 26a is used for attaching to the groove bottom 244a to fix the waterproof film 26 in the groove 244, and the second end face 26b faces the shell 10. With reference to FIG. 10, when the thickness of the waterproof film 26 is less than the depth of the groove 244, the second end face 26b is not in contact with the shell 10, that is, there is a gap between the second end face 26b and the shell 10. The second end face 26b is located between the outer surface 24a of the support member 24 and the groove bottom 244a, and the waterproof film 26 is entirely accommodated in the groove 244. The second end face 26b is not in contact with the shell 10 and is inevitably not squeezed by the shell 10. The waterproof film 26 has good audio characteristics and consistency when the waterproof film 26 is free from a pressing force.

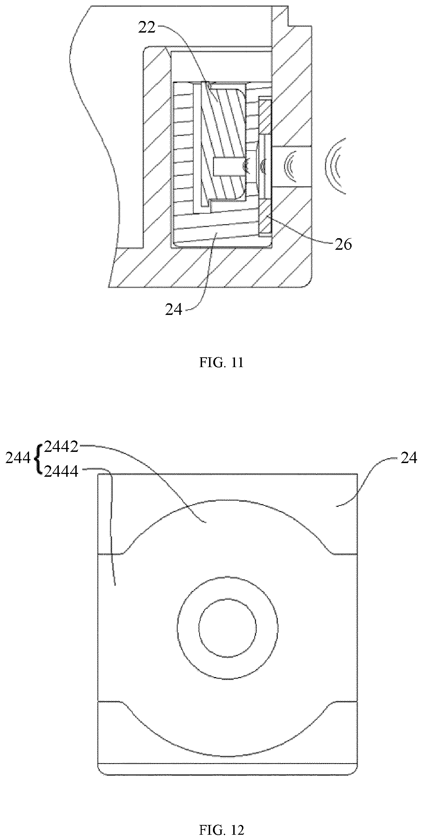

As shown in FIG. 11, in this embodiment, the sound wave from the outside causes the waterproof film 26 to vibrate, and the waterproof film 26 radiates the sound wave into the support member 24 and the sound wave is received by the microphone body 22. Specifically, the sound wave is received by the diaphragm in the microphone body 22. The waterproof film 26 functions as an acoustic diaphragm. In this embodiment, the thickness of the waterproof film 26 is less than the depth of the groove 244. There is sufficient space in the groove 244 for the waterproof film 26 to vibrate, thereby reducing impact of the waterproof film 26 on sound quality.

The waterproof film 26 separates the microphone body 22 in the support member 24 from the outside, and the groove 244 is made on the support member 24, so that the waterproof film 26 is positioned and firmly fixed by using the groove 244. In a process of assembling the microphone component 20 into the shell 10 and during normal use, the microphone body 22, the support member 24, and the like do not squeeze the waterproof film 26. The thickness of the waterproof film 26 is not greater than the depth of the groove 244. There is a gap between the waterproof film 26 and the shell 10 after the microphone component 20 is assembled, and the shell 10 does not squeeze the waterproof film 26. On the premise of ensuring good audio sealing and waterproofing effects, the waterproof film 26 maintains good audio characteristics and consistency, thereby improving audio experience of a product.

As shown in FIG. 4 and FIG. 9, in this embodiment, the waterproof film 26 includes a retaining ring 262 and a sieve mesh membrane 264. The retaining ring 262 fixes an edge of the sieve mesh membrane 264, and is configured to stretch and unfold the sieve mesh membrane 264, and the retaining ring 262 is adhered to the groove bottom 244a by using a double-sided tape. In an implementation, the retaining ring 262 is a circular ring, and when the circular ring is adhered to the groove bottom 244a, forces on the circular ring in all directions are balanced. This is helpful in firmly fixing the waterproof film 26 in the groove 244. In addition, the circular ring applies a balanced tensile force to the sieve mesh membrane 264 from all directions. This is helpful in unfolding and leveling the sieve mesh membrane 264, and avoids an unbalanced force on the sieve mesh membrane in one direction. As shown in FIG. 8, the waterproof film 26 is directly opposite to the first through-hole 246, in other words, a central axis of the waterproof film 26 coincides with that of the first through-hole 246. It can also be understood as that, the sieve mesh membrane 264 is directly opposite to the first through-hole 246, in other words, a central axis of the sieve mesh membrane 264 coincides with that of the first through-hole 246. When the waterproof film 26 is directly opposite to the first through-hole 246, it is helpful for the waterproof film 26 to radiate its own vibration into the inside of the support member 24 through the first through-hole 246, thereby reducing a loss of a sound wave. In an implementation, a size of the sieve mesh membrane 264 is greater than that of the first through-hole 246. In other words, a vertical projection of the sieve mesh membrane 264 on the groove bottom 244a covers the first through-hole 246. This is helpful in fully radiating a vibration of the sieve mesh membrane 264 into the first through-hole 246, reducing a loss of a sound wave transmitting from the waterproof film 26 to the first through-hole 246, and also reducing other external noise entering the first through-hole 246. As shown in FIG. 6, in an implementation, an upside-down angle 244c is disposed at a connection between the groove bottom 244a and the first through-hole 246. On one hand, the upside-down angle is configured to prevent a sharp edge of the first through-hole 246 from easily scratching an operator's finger during assembling of the microphone component 20. On the other hand, a transition from the waterproof film 26 to the first through-hole 246 is formed, thereby reducing a variation or a loss of a sound wave in a process of transmitting the sound wave from the waterproof film 26 to the first through-hole 246.

In this embodiment, a contour shape of the groove 244 is consistent with a shape of the waterproof film 26. Specifically, as shown in FIG. 4 and FIG. 12, when the waterproof film 26 is circular, a circular accommodation area 2442 and an action area 2444 that is located at two sides of the accommodation area 2442 are provided inside the groove 244. The waterproof film 26 is placed in the accommodation area 2442, and the action area 2444 connects the accommodation area 2442 and the outside. The action area 2444 is configured to help an operator to place a finger between the waterproof film 26 and the groove 244 to adjust a position of the groove 244. In an implementation, a size of the accommodation area 2442 is greater than that of the waterproof film 26, so that the waterproof film 26 has room to move in the groove 244. On one hand, this makes it convenient to adjust a position of the waterproof film 26 during assembling, and on the other hand, this prevents the groove 244 from squeezing the waterproof film 26 to affect audio characteristics and consistency of the waterproof film 26.

As shown in FIG. 7, in this embodiment, the microphone body 22 includes a top face 22a facing the groove 244, and the top face 22a is in contact with the inner surface 244b of the accommodation cavity 242. Specifically, when the top face 22a is in contact with the inner surface 244b, there is no gap between the microphone body 22 and the inner surface 244b of the accommodation cavity 242, so as to prevent leakage of a sound wave from a gap between the microphone body 22 and the accommodation cavity 242 after the sound wave enters the accommodation cavity 242 through the first through-hole 246, thereby improving an audio sealing effect. The sound wave entering the accommodation cavity 242 from the first through-hole is fully transmitted to the microphone body 22, and specifically, the sound wave fully enters the receiving hole 226, thereby improving audio experience of a product.

In an implementation, the top face 22a and the inner surface 244b are fitted with no gap, to reduce leakage of a sound wave from a gap between the top face 22a and the inner surface 244b, further improving an audio sealing effect and audio experience of a product.

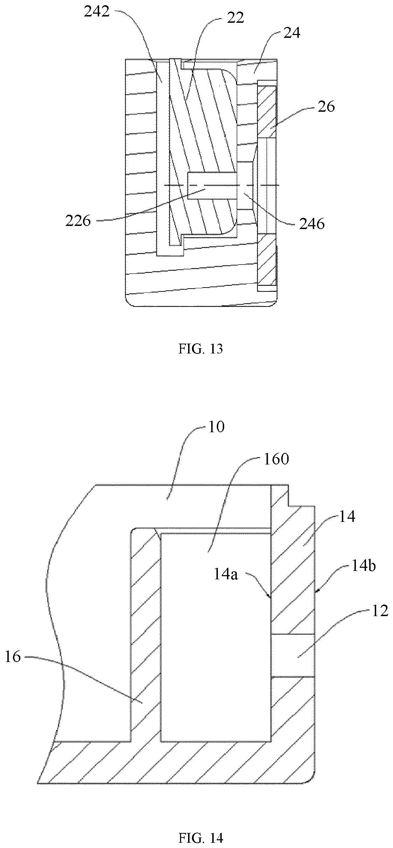

As shown in FIG. 7, in this embodiment, the receiving hole 226 is disposed on the top face 22a, and is connected to the inside of the microphone body 22. The receiving hole 226 is directly opposite to the first through-hole 246, in other words, a central axis of the receiving hole 226 coincides with that of the first through-hole 246. That the receiving hole 226 is directly opposite to the first through-hole 246 facilitates radiation of a sound wave from the receiving hole 226 into the inside of the microphone body 22, reducing a loss of the sound wave. In an implementation, a size of the receiving hole 226 is less than that of the first through-hole 246, that is, a vertical projection of the receiving hole 226 onto the inner surface 244b falls within a range of the first through-hole 246. This is helpful in fully radiating a sound wave passing through the first through-hole 246 into the receiving hole 226, reducing a loss of the sound wave transmitted from the first through-hole 246 to the receiving hole 226, and also reducing other external noise entering the receiving hole 226. As shown in FIG. 13, in an implementation, the central axis of the waterproof film 26, a central axis of the first through-hole 246, and the central axis of the receiving hole 226 are coincident, so that a shortest transmission path from the waterproof film 26 to the inside of the microphone body 22 is provided, reducing a loss of a sound wave.

In an implementation, the support member 24 is made of a rigid material, such as a hard rubber bracket. A structure of the support member 24 made of the rigid material is stable, and can provide better protection to the waterproof film 26. This allows the waterproof film 26 to maintain relatively good audio characteristics and consistency, and improves audio experience. In addition, the support member 24 made of the rigid material is tightly connected to mating faces of the shell 10 and the microphone body 22, thereby improving a waterproofing effect and an audio sealing effect.

As shown in FIG. 2, in this embodiment, the microphone component 20 further includes the flexible circuit board 28. With reference to FIG. 3 and FIG. 4, the flexible circuit board 28 includes a connection piece 282 and an extension piece 284 that are interconnected as a whole. The connection piece 282 is accommodated in the accommodation cavity 242 and fixedly connected to the microphone body 22, and the extension piece 284 is located outside the accommodation cavity 242 and configured to electrically connect to the signal processing apparatus of the intelligent electronic device 100. Specifically, the connection piece 282 and extension piece 284 are relatively bent to meet an internal space requirement of the shell 10 and a requirement for positional arrangement between electronic devices. In an implementation, the connection piece 282 is welded to the base 222 by using a surface mount technology, and the extension piece 284 is connected to the signal processing apparatus via a connector to electrically connect the microphone body 22 to the signal processing apparatus. The flexible circuit board 28 is flexible and bendable, and this can not only meet an electrical connection requirement, but also facilitate a space layout inside the shell 10.

An embodiment of this application further provides an intelligent electronic device 100. As shown in FIG. 1, the intelligent electronic device 100 provided in Embodiment 1 of this application includes a shell 10 and the microphone component 20 provided in Embodiment 1 of this application, and the microphone component 20 is fixed into the shell 10.

As shown in FIG. 1, in an implementation, the shell 10 includes an upper shell 10a and a lower shell 10b, where the upper shell 10a covers the lower shell 10b to form a closed structure of the shell 10. The microphone component 20 is accommodated inside the shell 10 including the upper shell 10a and the lower shell 10b. In this embodiment, the microphone component 20 is fixed inside the lower shell 10b. In another implementation, the microphone component 20 may alternatively be fixed inside the upper shell 10a. The intelligent electronic device 100 provided in this embodiment of this application is described by using an example in which the microphone component 20 is fixed inside the lower shell 10b. It may be understood that, a feature of the shell 10 in the intelligent electronic device 100 provided in this embodiment of this application and a connection relationship between the microphone component 20 and the shell 10 may be understood as a feature of the lower shell 10b and a connection relationship between the microphone component 20 and the lower shell 10b. Certainly, the microphone component 20 may alternatively be fixed inside the upper shell 10a, and details are not described herein.

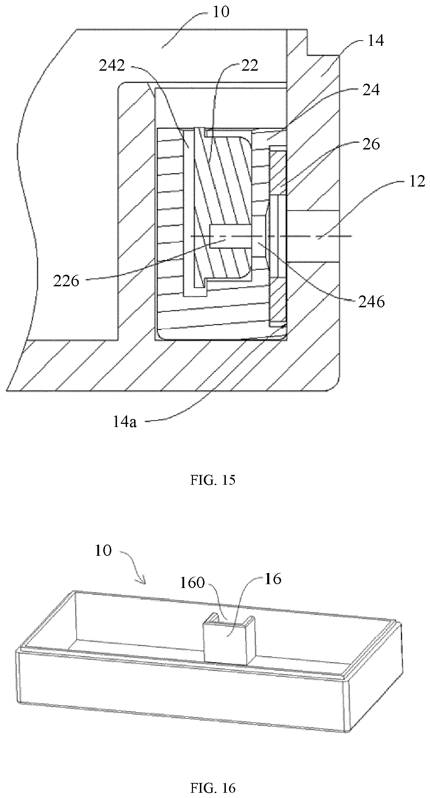

As shown in FIG. 14, in this embodiment, the shell 10 is provided with a second through-hole 12, and the second through-hole 12 penetrates through a sidewall 14 of the shell 10. With reference to FIG. 15, a waterproof film 26 is directly opposite to the second through-hole 12, and a sound wave from the outside passes through the second through-hole 12 and is transmitted to the waterproof film 26. In other words, a central axis of the waterproof film 26 coincides with that of the second through-hole 12, and this is helpful in reducing a loss of a sound wave transmitted to the waterproof film 26 after the sound wave enters the second through-hole 12. In addition, as shown in FIG. 15, in an implementation, a central axis of the second through-hole 12, the central axis of the waterproof film 26, a central axis of a first through-hole 246, and a deco are coincident, so that a shortest transmission path from the outside of the shell 10 to the inside of a microphone body 22 is provided, reducing a loss of a sound wave. As shown in FIG. 14, in this embodiment, the sidewall 14 of the shell 10 includes an inner wall surface 14a and an outer wall surface 14b that are disposed oppositely to each other, and the second through-hole 12 connects the inner wall surface 14a and the outer wall surface 14b. In an implementation, a size of the waterproof film 26 is greater than that of the second through-hole 12, that is, a vertical projection of the waterproof film 26 onto the inner wall surface 14a covers the second through-hole 12, so that a sound wave passing through the second through-hole 12 and entering the shell 10 can be fully transmitted to the waterproof film 26, reducing a loss of the sound wave.

As shown in FIG. 14 and FIG. 16, in this embodiment, a positioning plate 16 is provided inside the shell 10, and the positioning plate 16 and the sidewall 14 are interconnected as a whole to form a positioning slot 160. Specifically, there are a plurality of positioning plates 16 and the plurality of positioning plates are connected in a head-to-end manner and are connected to the sidewall 14 of the shell 10 to form a case with an opening, in other words, the positioning slot 160. With reference to FIG. 15, the microphone component 20 is accommodated in the positioning slot 160. Specifically, the microphone component 20 is inserted into the positioning slot 160 from the opening of the positioning slot 160 and is entirely accommodated in the positioning slot 160. The positioning slot 160 functions to fix the microphone component 20. In this embodiment, an outer surface 24a of the microphone component 20 is in contact with the sidewall 14. Specifically, the outer surface 24a that is of the microphone component 20 and that is provided with a groove 244 is in contact with the inner wall surface 14a of the sidewall 14, allowing no gap between a support member 24 and a mating face of the shell 10. On one hand, a waterproofing function is implemented, that is, water is prevented from leaking to the shell 10 from a gap between the support member 24 and the mating face of the shell 10 after the water enters the second through-hole 12. On the other hand, an audio sealing effect is implemented, that is, a sound wave is not leaked from the gap between the support member 24 and the mating face of the shell 10 after the sound wave enters the second through-hole 12, and no loss is caused to the sound wave. In an implementation, the support member 24 is made of a rigid material, such as a hard rubber bracket. The support member 24 made of the rigid material is tightly connected to the mating face of the shell 10, thereby improving a waterproofing effect and the audio sealing effect.

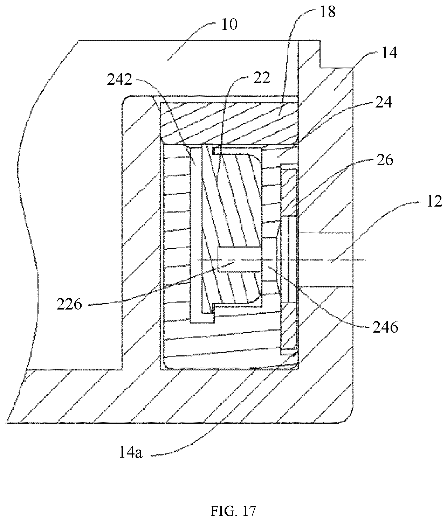

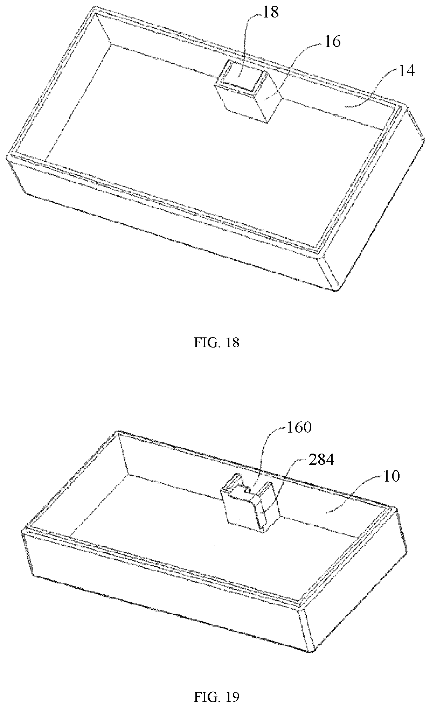

As shown in FIG. 17 and FIG. 18, in this embodiment, the intelligent electronic device 100 further includes a sealant 18, and the sealant 18 connects the sidewall 14 and the positioning plate 16. The sealant 18 is configured to enclose the microphone body 22, the support member 24 and the waterproof film 26 in the positioning slot 160. In this embodiment, the sealant 18 is formed after the microphone component 20 is inserted into the positioning slot 160 to enclose the microphone component 20 in the positioning slot 160. Specifically, the sealant 18 fills in the opening of the positioning slot 160, so that the positioning plate 16, the sidewall 14 of the shell 10, and the sealant 18 form a case, the second through-hole 12 is an only path connecting the case to the outside. The sealant 18 separates the microphone component 20 from the inside of the shell 10 while providing waterproofing and audio sealing functions. Due to errors of assembling and component production, there may be a small gap between the sidewall 14 of the shell 10 and a mating face of the support member 24, between the support member 24 and a mating face of the microphone body 22, and between the support member 24 and the positioning plate 16. The sealant 18 separates the inside and outside of the positioning slot 160, thereby further improving waterproofing and audio sealing effects.

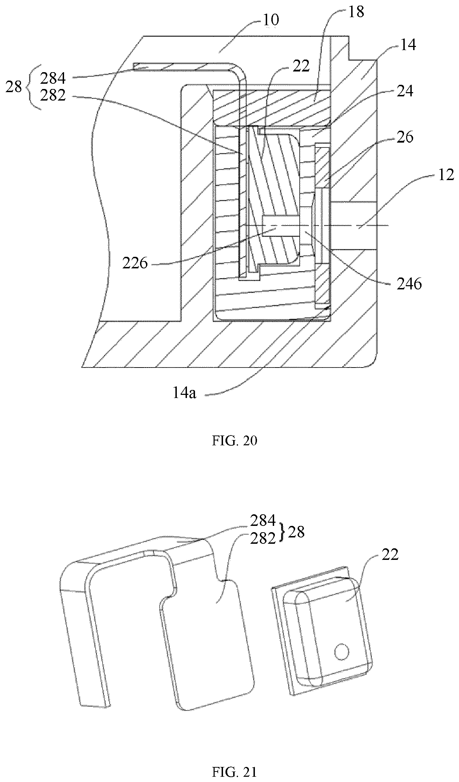

As shown in FIG. 19 and FIG. 20, in this embodiment, an extension piece 284 is located outside the positioning slot 160, and configured to electrically connect to a signal processing apparatus of the intelligent electronic device 100. Specifically, the extension piece 284 extends to the outside of the positioning slot 160 through the sealant 18, thereby electrically connecting the microphone body 22 inside the positioning slot 160 to the signal processing apparatus to complete signal transmission.

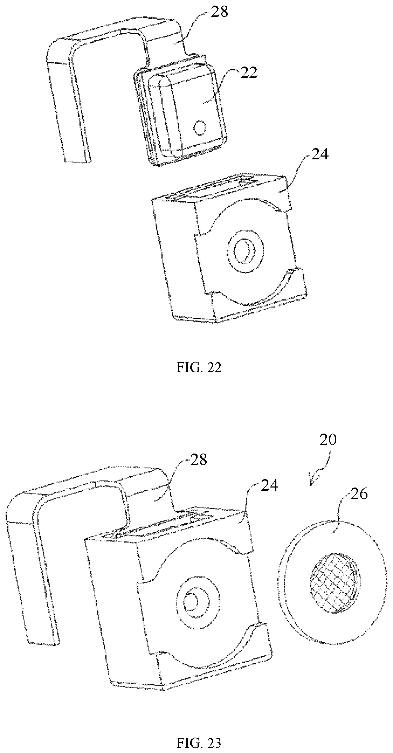

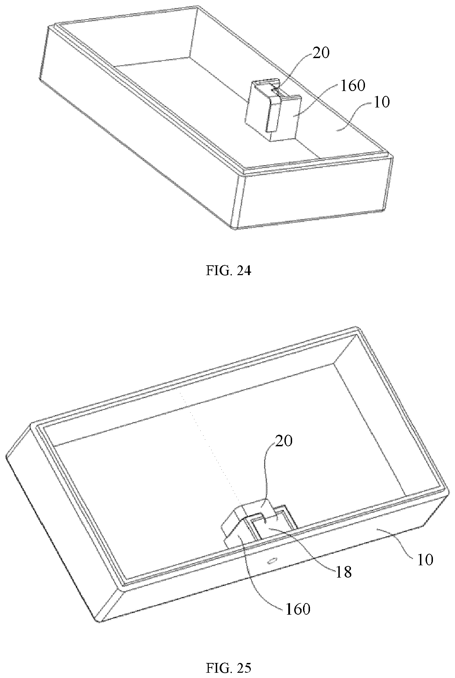

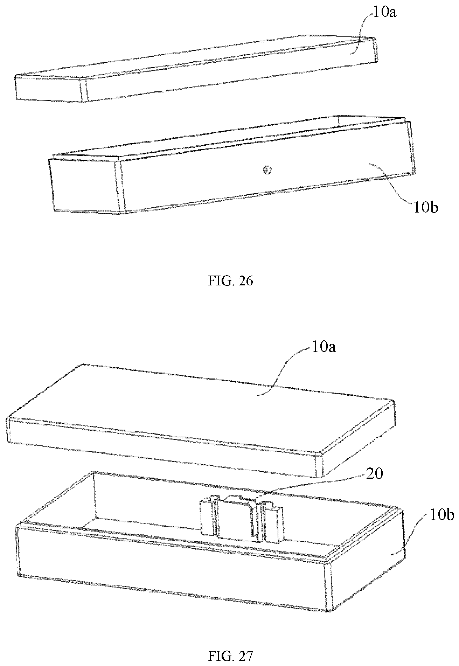

In this embodiment, an assembling process of the intelligent electronic device 100 may be divided into the following steps:
S101. Connect the microphone body 22 to a connection piece 282 of a flexible circuit board 28 by using a surface mount technology (as shown in FIG. 21).
S102. Insert the flexible circuit board 28 and the support member 24 into the support member 24 (as shown in FIG. 22).
S103. Attach the waterproof film 26 to a groove bottom 244a of the groove 244 of the support member 24 by using a double-sided tape, to form the microphone component 20 (as shown in FIG. 23).
S104. Insert the microphone component 20 into the positioning slot 160 (as shown in FIG. 24).
S105. Perform dispensing on the opening of the positioning slot 160 to form the sealant 18 (as shown in FIG. 25).
S106. Cover the upper shell 10a on the lower shell 10b (as shown in FIG. 26).

The waterproof film 26 separates the microphone body 22 from the outside. In the assembling process of the intelligent electronic device 100, the waterproof film 26 is not squeezed by the microphone body 22, the support member 24 or the shell 10. Therefore, the waterproof film 26 maintains good audio characteristics and consistency, thereby improving audio experience of a product.

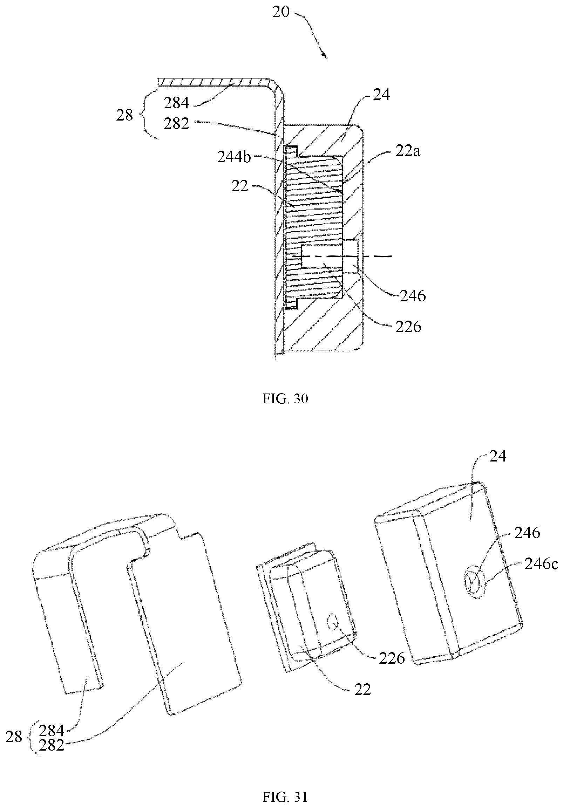

As shown in FIG. 27, FIG. 28, and FIG. 29, an intelligent electronic device 100 provided in Embodiment 2 of this application includes a microphone component 20, a shell 10, and a waterproof film 26. Specifically, the microphone component 20 is fixed into the shell 10, and a sidewall 14 of the shell 10 is provided with a second through-hole 12. The microphone component 20 is directly opposite to the second through-hole 12, and is connected to the outside of the shell 10 through the second through-hole 12. One side of the outer wall surface 14b of the sidewall 14 is provided with a groove 244, and the waterproof film 26 is directly opposite to the second through-hole 12 and is accommodated in the groove 244. The waterproof film 26 separates the inside and outside of the shell 10. In this embodiment, the microphone component 20 is configured to receive a sound wave. Specifically, as shown in FIG. 30 and FIG. 31, the microphone component 20 includes a microphone body 22, a support member 24, and a flexible circuit board 28. The support member 24 is fixed into the shell 10, and the flexible circuit board 28 includes a connection piece 282 and an extension piece 284 that are interconnected as a whole. The microphone body 22 is fixedly connected to the connection piece 282, and both the microphone body 22 and the connection piece 282 are accommodated in the support member 24. The extension piece 284 is located outside the support member 24, to electrically connect to a signal processing apparatus of the intelligent electronic device 100. In this embodiment, the support member 24 is a case structure, and the connection piece 282 of the flexible circuit board 28 is covered on the support member 24 to form a complete box. The support member 24 is provided with a first through-hole 246. With reference to FIG. 30, the first through-hole 246 is an only path connecting the inside of the support member 24 to the outside. As shown in FIG. 30, in an implementation, the top face 22a of the microphone body 22 is in contact with the inner surface 244b of the support member 24, allowing no gap between the microphone body 22 and the inner surface 244b of the accommodation cavity 242. This prevents leakage of a sound wave from a gap between the microphone body 22 and the accommodation cavity 242 after the sound wave enters the accommodation cavity 242 through the first through-hole 246, thereby improving an audio sealing effect. The sound wave entered to the accommodation cavity 242 through the first through-hole 246 is fully transmitted to the microphone body 22. Specifically, in FIG. 30, the top face 22a of the microphone body 22 is provided with a receiving hole 226, and the sound wave fully enters to the receiving hole 226, thereby improving audio experience of a product. In this embodiment, the receiving hole 226 is directly opposite to the first through-hole 246. In other words, a central axis of the receiving hole 226 coincides with that of the first through-hole 246. That the receiving hole 226 is directly opposite to the first through-hole 246 facilitates radiation of a sound wave from the receiving hole 226 into the inside of the microphone body 22, reducing a loss of the sound wave. In an implementation, a size of the receiving hole 226 is less than that of the first through-hole 246, that is, a vertical projection of the receiving hole 226 onto the inner surface 244b falls within a range of the first through-hole 246. This is helpful in fully radiating a sound wave passing through the first through-hole 246 into the receiving hole 226, reducing a loss of the sound wave transmitted from the first through-hole 246 to the receiving hole 226, and also reducing other external noise entering the receiving hole 226.

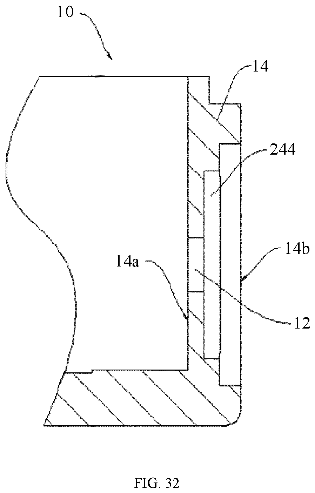

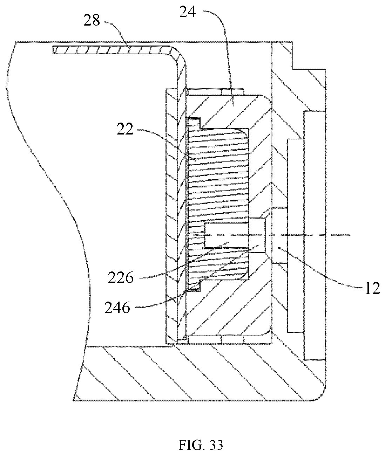

In this embodiment, the microphone component 20 is fixed into the shell 10. As shown in FIG. 32 and FIG. 33, the sidewall 14 of the shell 10 is provided with the second through-hole 12. The microphone component 20 is directly opposite to the second through-hole 12, and is connected to the outside of the shell 10 through the second through-hole 12. Specifically, the second through-hole 12 penetrates through the sidewall 14 of the shell 10. Specifically, in FIG. 33, the central axis of the second through-hole 12, the central axis of the first through-hole 246, and the central axis of the receiving hole 226 are coincident, so that a shortest transmission path from the outside of the shell 10 to the inside of the microphone body 22 is provided, reducing a loss of a sound wave. In this embodiment, the sidewall 14 of the shell 10 includes an inner wall surface 14a and the outer wall surface 14b that are disposed oppositely to each other, and the second through-hole 12 connects the inner wall surface 14a and the outer wall surface 14b.

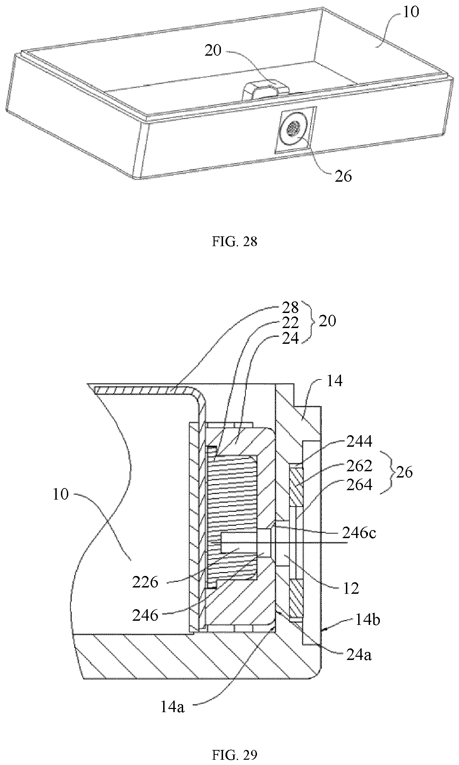

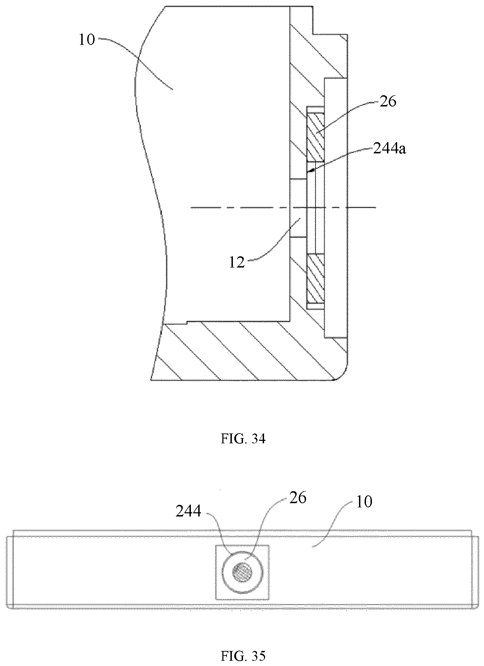

As shown in FIG. 29, in this embodiment, the waterproof film 26 is directly opposite to the second through-hole 12, and the groove 244 is provided on the one side of the outer wall surface 14b of the sidewall 14, where the waterproof film 26 is accommodated in the groove 244. A sound wave from the outside causes the waterproof film 26 to vibrate, and the waterproof film 26 radiates the sound wave into the microphone component 20. Specifically, with reference to FIG. 32, the groove 244 is formed on the shell 10 from one side of the outer wall surface 14b of the sidewall 14, and the groove 244 is connected to the inside of the shell 10 through the second through-hole 12. As shown in FIG. 34, in this embodiment, the groove bottom 244a is provided inside the groove 244, and the waterproof film 26 is attached and fixed to the groove bottom 244a. In an implementation, the waterproof film 26 is attached on the groove bottom 244a by using a double-sided tape. On one hand, the double-sided tape firmly fixes the waterproof film 26; and on the other hand, the double-sided tape allows no gap between the waterproof film 26 and a mating face of the groove bottom 244a, thereby avoiding water from entering a gap between the waterproof film 26 and the groove bottom 244a to remain in the groove 244. In this embodiment, the waterproof film 26 is directly opposite to the second through-hole 12. In other words, a central axis of the waterproof film 26 coincides with that of the second through-hole 12. This is helpful in reducing a loss of a sound wave transmitted to the waterproof film 26 after the sound wave enters the second through-hole 12. As shown in FIG. 29, in an implementation, the central axis of the waterproof film 26, the central axis of the second through-hole 12, the central axis of the first through-hole 246, and the central axis of the receiving hole 226 are coincident, so that a shortest transmission path from the outside of the shell 10 to the inside of the microphone body 22 is provided, reducing a loss of a sound wave. In an implementation, a size of the waterproof film 26 is greater than that of the second through-hole 12 to facilitate transmission of an entire sound wave generated by a vibration of the waterproof film 26 to the inside of the shell 10, thereby reducing a loss of the sound wave.

As shown in FIG. 29, the waterproof film 26 is directly opposite to the first through-hole 246, in other words, the central axis of the waterproof film 26 coincides with that of the first through-hole 246. It can also be understood as that, a sieve mesh membrane 264 is directly opposite to the first through-hole 246, in other words, a central axis of the sieve mesh membrane 264 coincides with that of the first through-hole 246. When the waterproof film 26 is directly opposite to the first through-hole 246, it is helpful for the waterproof film 26 to radiate its own vibration into the inside of the support member 24 through the first through-hole 246, thereby reducing a loss of a sound wave. As shown in FIG. 29 and FIG. 31, in an implementation, an upside-down angle 246c is provided at a connection between the outer surface 24a of the support member 24 and the first through-hole 246. On one hand, the upside-down angle 246c is configured to prevent a sharp edge of the first through-hole 246 from easily scratching an operator's finger during assembling of the microphone component 20. On the other hand, a transition from the second through-hole 12 to the first through-hole 246 is formed, thereby reducing a variation or a loss of a sound wave in a process of transmitting the sound wave from the waterproof film 26 to the first through-hole 246.

In this embodiment, a contour shape of the groove 244 is consistent with a shape of the waterproof film 26. Specifically, as shown in FIG. 35, when the waterproof film 26 is circular, the groove 244 is also circular. In an implementation, a size of the groove 244 is greater than that of the waterproof film 26, so that the waterproof film 26 has room to move in the groove 244. On one hand, this makes it convenient to adjust the position of the waterproof film 26 during assembling, and on the other hand, this prevents the groove 244 from squeezing the waterproof film 26 to affect audio characteristics and consistency of the waterproof film 26.

As shown in FIG. 29, in this embodiment, the microphone component 20 is in contact with the inner wall surface 14a of the sidewall 14 of the shell 10. Specifically, the outer surface 24a of the support member 24 is in contact with the inner wall surface 14a of the sidewall 14, allowing no gap between the support member 24 and a mating face of the shell 10. On one hand, a waterproofing function is implemented, that is, water is prevented from leaking to the shell 10 from a gap between the support member 24 and the mating face of the shell 10 after the water enters the second through-hole 12. On the other hand, an audio sealing effect is implemented, that is, a sound wave is not leaked from the gap between the support member 24 and the mating face of the shell 10 after the sound wave enters the second through-hole 12, and no loss is caused to the sound wave. According to the invention, the support member 24 is made of an elastic material, such as a soft rubber bracket. The support member 24 made of the elastic material is compressible. The support member 24 is tightly connected to the mating face of the shell 10, thereby improving the audio sealing effect.

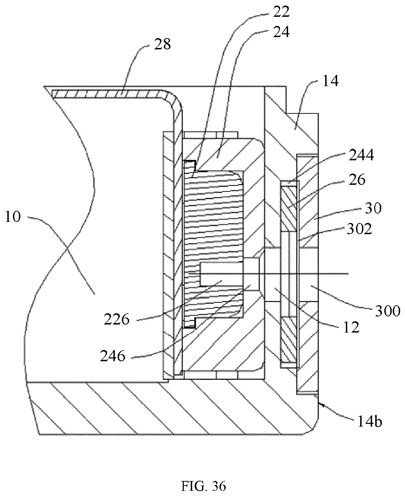

As shown in FIG. 36, in this embodiment, the intelligent electronic device 100 further includes a decorative sheet 30, and the decorative sheet 30 is fixed onto the sidewall 14 and covers the waterproof film 26. Specifically, the decorative sheet 30 is sheet-like. The decorative sheet 30 separates the waterproof film 26 from the outside to protect the waterproof film 26, avoiding dumping against the waterproof film 26 or dust deposition on the sieve mesh membrane 264 to block the sieve mesh membrane 264. In this embodiment, the decorative sheet 30 is provided with a third through-hole 300 penetrating through the decorative sheet 30. The third through-hole 300 connects the waterproof film 26 to the outside to transmit a sound wave to the waterproof film 26. Specifically, with reference to FIG. 36, the third through-hole 300 is directly opposite to the waterproof film 26. A central axis of the third through-hole 300, the central axis of the waterproof film 26, the central axis of the second through-hole 12, the central axis of the first through-hole 246, and the central axis of the receiving hole 226 are coincident, so that a shortest transmission path from the outside of the shell 10 to the inside of the microphone body 22 is provided, thereby reducing a loss of a sound wave. In an implementation, the decorative sheet 30 faces an outer surface of the shell 10 is flush with the outer wall surface 14b to make a surface of the shell 10 flat and beautiful.

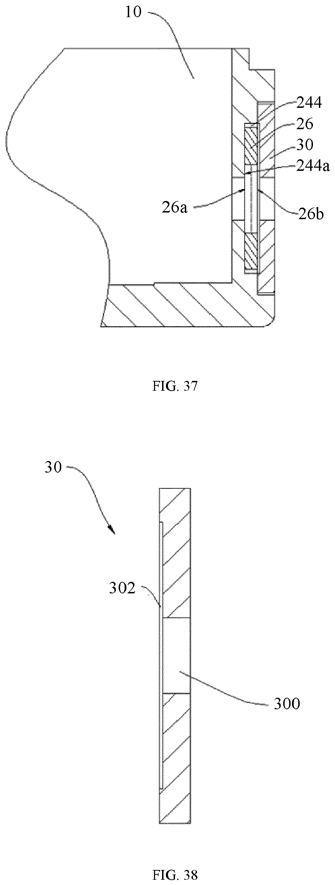

As shown in FIG. 37, in an implementation, a thickness of the waterproof film 26 is not greater than a vertical distance between the groove bottom 244a and the decorative sheet 30. The waterproof film 26 includes the first end face 26a and the second end face 26b that are disposed oppositely to each other. The first end face 26a is configured to attach to the groove bottom 244a to fix the waterproof film 26 into the groove 244. The second end face 26b faces the outside of the groove 244, that is, faces the decorative sheet 30. When the thickness of the waterproof film 26 is less than the vertical distance between the groove bottom 244a and the decorative sheet 30, the second end face 26b is not in contact with the decorative sheet 30, that is, there is a gap between the second end face 26b and the decorative sheet 30. The second end face 26b is located between the decorative sheet 30 and the groove bottom 244a, and the waterproof film 26 is entirely accommodated in the groove 244. The second end face 26b is not in contact with the decorative sheet 30 and is inevitably not squeezed by the decorative sheet 30 or the shell 10. The waterproof film 26 has good audio characteristics and consistency when the waterproof film 26 is free from a pressing force. With reference to FIG. 36 and FIG. 38, in an implementation, a surface that is of the decorative sheet 30 and that faces the waterproof film 26 is provided with a recess 302. A size of the recess 302 corresponds to the size of the groove 244, and the waterproof film 26 is accommodated between the recess 302 and the groove 244. The recess 302 allows a gap between the waterproof film 26 and the decorative sheet 30, preventing the decorative sheet 30 from squeezing the waterproof film 26.

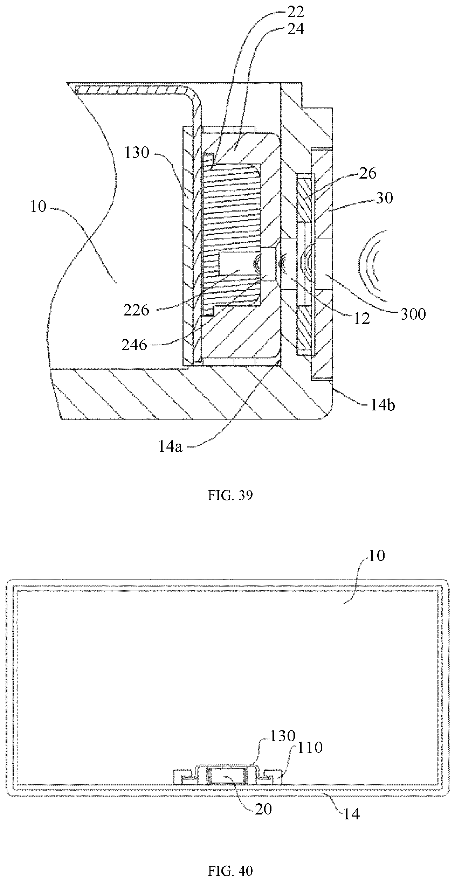

As shown in FIG. 39, in this embodiment, a sound wave from the outside causes the waterproof film 26 to vibrate, and the waterproof film 26 radiates the sound wave into the support member 24 and the sound wave is received by the microphone body 22. Specifically, the sound wave is received by the diaphragm in the microphone body 22. The waterproof film 26 functions as an acoustic diaphragm.

The waterproof film 26 separates the inside and outside of the shell 10, and the groove 244 is made on the shell 10 to position and firmly fix the waterproof film 26. In a process of assembling the microphone component 20 into the shell 10 and during normal use, the microphone body 22, the support member 24, and the like are not in contact with or squeeze the waterproof film 26. The thickness of the waterproof film 26 is not greater than the depth of the groove 244. There is a gap between the waterproof film 26 and the decorative sheet 30 after the microphone component 20 is assembled, and the decorative sheet 30 does not squeeze the waterproof film 26. On the premise of ensuring good audio sealing and waterproofing effects, the waterproof film 26 maintains good audio characteristics and consistency, thereby improving audio experience of a product.

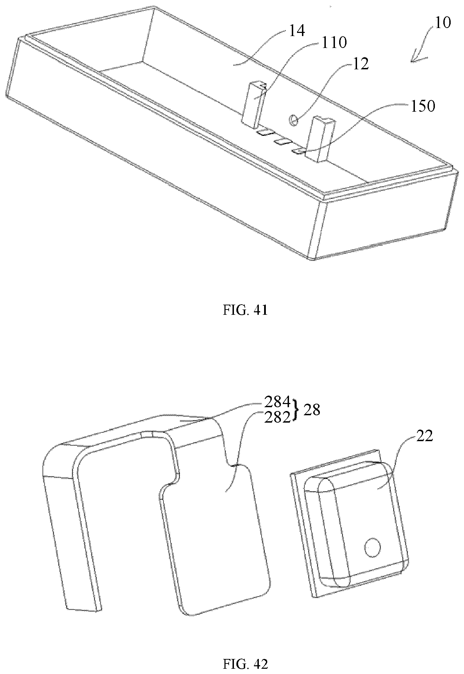

As shown in FIG. 41, in this embodiment, a pair of oppositely-disposed fixing ears 110 is further provided inside the shell 10. Specifically, the fixing ears 100 are disposed on the inner wall surface 14a of the sidewall 14 in the shell 10, and the two fixing ears 110 are respectively located on two sides of the second through-hole 12. As shown in FIG. 40, a pressing piece 130 is fixed between the pair of fixing ears 110. The pressing piece 130 is inserted between the pair of fixing ears 110, and the pressing piece 130 fixes the microphone component 20 inside the shell 10. Specifically, with reference to FIG. 39, a direction of a pressure of the pressing piece 130 against the microphone component 20 is opposite to that of a pressure of the sidewall 14 of the shell 10 against the microphone component 20, thereby fixing the microphone component 20 inside the shell 10. The pressing piece 130 squeezes the microphone component 20, so that the microphone component 20 abuts against the inner wall surface 14a of the sidewall 14. Specifically, the outer surface 24a of the support member 24 abuts against the inner wall surface 14a, allowing no gap between the support member 24 and the mating face of the shell 10. This prevents a sound wave from leaking from the gap between the support member 24 and the mating face of the shell 10 after the sound wave enters the shell 10 through the second through-hole 12, thereby improving the audio sealing effect. According to the invention, the support member 24 is made of an elastic material, such that the support member 24 is compressed and deformed when being squeezed by the pressing piece 130, so that the support member 24 is more tightly connected to the shell 10, thereby improving the audio sealing effect. As shown in FIG. 41, in an implementation, a spacer 150 is further provided inside the shell 10. The spacer 150 is configured to raise the microphone component 20, or it can be understood as that the spacer 150 is configured to specify a position of the microphone component 20, so that the first through-hole 246 of the microphone component 20 is directly opposite to the second through-hole 12 of the shell 10.

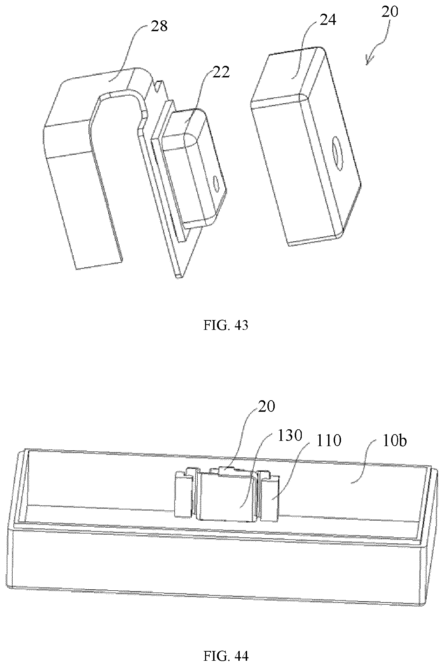

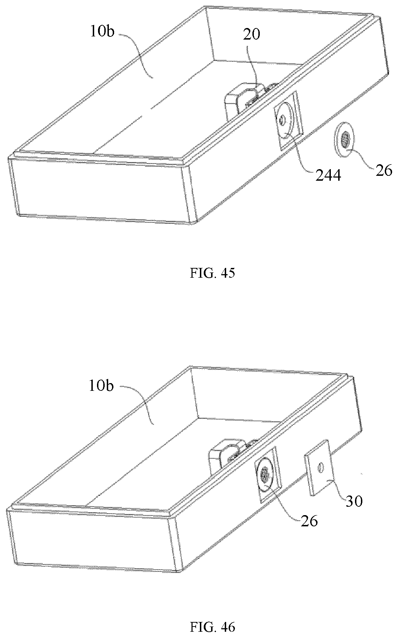

In this embodiment, an assembling process of the intelligent electronic device 100 may be divided into the following steps:
S201. Connect the microphone body 22 to the connection piece 282 of the flexible circuit board 28 by using a surface mount technology (as shown in FIG. 42).
S202. Put together the flexible circuit board 28 and the support member 24, so that the flexible circuit board 28, the support member 24, and the microphone body 22 form the microphone component 20, where the microphone body 22 is accommodated inside the support member 24 (as shown in FIG. 43).
S203. Place the microphone component 20 inside the lower shell 10b, and insert the pressing piece 130 between the pair of fixing ears 110 to fix the microphone component 20 (as shown in FIG. 44).
S204. Attach the waterproof film 26 to the inside of the groove 244 by using a double-sided tape (as shown in FIG. 45).
S205. Install the decorative sheet 30 (as shown in FIG. 46).
S206. Cover the upper shell 10a on the lower shell 10b (as shown in FIG. 17).

In an implementation, steps S204 and S205 may also be performed before S201.

The waterproof film 26 separates the microphone body 22 from the outside. In the assembling process of the intelligent electronic device 100, the waterproof film 26 is not squeezed by the microphone component 20 or the shell 10. Therefore, the waterproof film 26 maintains good audio characteristics and consistency, thereby improving audio experience of a product.

## Claims

1. An electronic device comprising:
• a microphone component (20) configured to receive a sound wave, wherein the microphone component (20) comprises a microphone body (22), a support member (24), and a flexible circuit board (28), the support member (24) is fixed into a shell (10), the flexible circuit board (28) comprises a connection piece and an extension piece that are interconnected as a whole, the connection piece is fixedly connected to the microphone body (22) and is accommodated in the support member (24) together with the microphone body (22), and the extension piece is located outside the support member (24) and configured to electrically connect to a signal processing apparatus of the electronic device;
• the shell (10), wherein the microphone component (20) is fixed to the shell,
∘ wherein a sidewall (14) of the shell (10) is provided with a through-hole (12), and the sidewall (14) comprises an inner wall surface (14a) and an outer wall surface (14b),
∘ wherein a groove (244) is provided on the outer wall surface (14b) of the sidewall and the groove (244) is connected to an inside of the shell (10) through the through hole (12),
∘ wherein the microphone component (20) is provided opposite to the through-hole (12) and is in contact with the inner wall surface (14a), wherein the support member (24) is made of an elastic material, so that the support member fits to the inner wall surface (14a) after being squeezed; and
• a waterproof film (26) accommodated in the groove (244), and the waterproof film (26) is provided opposite to the through-hole (12), so that a sound wave from the outside reaches the microphone component (20) via vibrations of the waterproof film (26), wherein a thickness of the waterproof film is not greater than a depth of the groove.

2. The electronic device according to claim 1, wherein the waterproof film comprises a retaining ring and a sieve mesh membrane, the retaining ring secures an edge of the sieve mesh membrane and is configured to stretch and unfold the sieve mesh membrane, the groove comprises a groove bottom, and the retaining ring is adhered to the groove bottom by using a double-sided tape.

3. The electronic device according to claim 2, wherein the electronic device further comprises a decorative sheet, the decorative sheet is fixed onto the sidewall and covers the waterproof film.

## Patentansprüche

1. Elektronische Vorrichtung, Folgendes umfassend:
• eine Mikrofonkomponente (20), die dazu konfiguriert ist, eine Schallwelle zu empfangen, wobei die Mikrofonkomponente (20) einen Mikrofonkörper (22), ein Trägerelement (24) und eine flexible Leiterplatte (28) umfasst, das Trägerelement (24) in einem Gehäuse (10) befestigt ist, die flexible Leiterplatte (28) ein Verbindungsstück und ein Verlängerungsstück umfasst, die als Ganzes miteinander verbunden sind, das Verbindungsstück fest mit dem Mikrofonkörper (22) verbunden ist und in dem Trägerelement (24) zusammen mit dem Mikrofonkörper (22) untergebracht ist, und sich das Verlängerungsstück außerhalb des Trägerelements (24) befindet und dazu konfiguriert ist, mit einem Signalverarbeitungsgerät der elektronischen Vorrichtung elektrisch verbunden zu werden;
• das Gehäuse (10), wobei die Mikrofonkomponente (20) an dem Gehäuse befestigt ist,
○ wobei eine Seitenwand (14) des Gehäuses (10) mit einem Durchgangsloch (12) versehen ist und die Seitenwand (14) eine Innenwandfläche (14a) und eine Außenwandfläche (14b) umfasst,
○ wobei eine Nut (244) an der Außenwandfläche (14b) der Seitenwand vorgesehen ist und die Nut (244) durch das Durchgangsloch (12) mit einer Innenseite des Gehäuses (10) verbunden ist,
○ wobei die Mikrofonkomponente (20) gegenüber dem Durchgangsloch (12) vorgesehen ist und in Kontakt mit der Innenwandfläche (14a) steht, wobei das Trägerelement (24) aus einem elastischen Material hergestellt ist, sodass das Trägerelement, nachdem es zusammengedrückt wurde, an die Innenwandfläche (14a) passt; und
• einen wasserdichten Film (26), der in der Nut (244) untergebracht ist, und der wasserdichte Film (26) gegenüber dem Durchgangsloch (12) vorgesehen ist, sodass eine Schallwelle von außerhalb die Mikrofonkomponente (20) über Vibrationen des wasserdichten Films (26) erreicht, wobei eine Dicke des wasserdichten Films nicht größer als eine Tiefe der Nut ist.

2. Elektronische Vorrichtung gemäß Anspruch 1, wobei der wasserdichte Film einen Haltering und eine Siebmaschenmembran umfasst, der Haltering einen Rand der Siebmaschenmembran sichert und dazu konfiguriert ist, die Siebmaschenmembran zu dehnen und zu entfalten, die Nut einen Nutboden umfasst und der Haltering unter Verwendung eines doppelseitigen Klebebandes an den Nutboden geklebt ist.

3. Elektronische Vorrichtung gemäß Anspruch 2, wobei die elektronische Vorrichtung ferner eine dekorative Folie umfasst, wobei die dekorative Folie an der Seitenwand befestigt ist und den wasserdichten Film bedeckt.

## Revendications

1. Dispositif électronique comprenant :
• un composant de microphone (20) configuré pour recevoir une onde sonore, dans lequel le composant de microphone (20) comprend un corps de microphone (22), un élément de support (24) et un circuit imprimé flexible (28), l'élément de support (24) est fixé dans une coque (10), le circuit imprimé flexible (28) comprend une pièce de connexion et une pièce d'extension qui sont interconnectées comme un tout, la pièce de connexion est reliée de manière fixe au corps de microphone (22) et est logée dans l'élément de support (24) conjointement avec le corps de microphone (22), et la pièce d'extension est située à l'extérieur de l'élément de support (24) et est configurée pour se connecter électriquement à un appareil de traitement de signal du dispositif électronique ;
• la coque (10), dans lequel le composant de microphone (20) est fixé à la coque,
○ dans lequel une paroi latérale (14) de la coque (10) est dotée d'un trou traversant (12), et la paroi latérale (14) comprend une surface de paroi interne (14a) et une surface de paroi externe (14b),
○ dans lequel une rainure (244) est prévue sur la surface de paroi externe (14b) de la paroi latérale et la rainure (244) est reliée à un intérieur de la coque (10) par l'intermédiaire du trou traversant (12),
○ dans lequel le composant de microphone (20) est prévu en face du trou traversant (12) et est en contact avec la surface de paroi interne (14a), dans lequel l'élément de support (24) est constitué d'un matériau élastique, de sorte que l'élément de support s'adapte à la surface de paroi interne (14a) après avoir été comprimé ; et
• un film imperméable (26) logé dans la rainure (244), et le film imperméable (26) est prévu en face du trou traversant (12), de sorte qu'une onde sonore provenant de l'extérieur atteigne le composant de microphone (20) par l'intermédiaire de vibrations du film imperméable (26), dans lequel une épaisseur du film imperméable n'est pas supérieure à une profondeur de la rainure.

2. Dispositif électronique selon la revendication 1, dans lequel le film imperméable comprend une bague de retenue et une membrane maillée, la bague de retenue maintient un bord de la membrane maillée et est configuré pour étirer et déplier la membrane maillée, la rainure comprend un fond de rainure, et la bague de retenue est collée au fond de rainure au moyen d'un ruban adhésif double face.

3. Dispositif électronique selon la revendication 2, dans lequel le dispositif électronique comprend en outre une feuille décorative, la feuille décorative est fixée sur la paroi latérale et recouvre le film imperméable.
